# EUROPEAN PATENT APPLICATION

(11) **EP 1 800 762 A2**
(43) Date of publication of application: **27.06.2007**
(21) Application number: 06023877.1
(22) Date of filing: 17.11.2006
(51) Int. Cl.: B05C 17/02, B44D 3/12

(54) **A coating system**

(30) Priority: 23.12.2005 GB 0526362
(71) Applicant: Imperial Chemical Industries Plc., London W1U 3AN (GB)
(72) Inventor: Palfrey, Philip James, High Wycombe Bucks HP13 7DY (GB)
(74) Representative: Ellis, Christopher Paul

(57) **Abstract**

A coating system comprising a container (12) having a coating composition, and a roller for applying the coating composition to a surface, the coating composition having a high shear viscosity of between 5.5 to 8.0 poise at 25°C (ICI cone and plate viscometer) and a surface drying time greater than 60 minutes at a temperature of 25°C and a humidity of 50%.

## Description

The present invention relates to a coating system, and a method of applying a coating composition.

Coating compositions such as paints are applied to surfaces by both the skilled professional decorator and the relatively unskilled do-it-yourself painter for a variety of reasons, one of which is to provide protection against the environment.

It is known to coat metal surfaces, for example, wrought iron railings, with a specific type of coating composition designed to withstand the particular conditions the railings are subjected to.

In the case of iron railings, the corrosion resistance is low, and therefore it is common to apply an anti-rust coating to protect them. One problem associated with applying such a coating is that the coating is applied using a brush, and therefore the time to apply the coating is high.

It would be advantageous to be able to apply such coating compositions using a roller to reduce the application time, however known coating composition and roller combinations prevent this. The problem of high application time is exasperated in the case of railings where there is a multitude of surfaces requiring protection.

An object of the present invention is to provide a coating system which enables improved application of a coating composition.

According to the present invention there is provided a coating system comprising a container having a coating composition, and a roller for applying the coating composition to a surface, the coating composition having a high shear viscosity of between 5.5 to 8.0 poise at 25°C (ICI cone and plate viscometer) and a surface drying time greater than 60 minutes at a temperature of 25°C and a humidity of 50%.

According to a second aspect of the present invention there is provided a method for applying a coating composition to a surface using a roller, the coating composition having a high shear viscosity of between 5.5 to 8.0 poise at 25°C (ICI cone and plate viscometer) and a surface drying time greater than 60 minutes at a temperature of 25°C and a humidity of 50%.

According to a third aspect of the present invention there is provided a coating composition having a high shear viscosity of between 5.5 to 8.0 poise at 25°C (ICI cone and plate viscometer) and a surface drying time greater than 60 minutes at a temperature of 25°C and a humidity of 50%.

By using a coating composition having these specific properties, it is possible to apply the coating composition using the roller, thereby reducing the time required to apply the coating to a surface in comparison to using a brush.

Another problem associated with applying a coating composition with a roller is that of removing excess coating composition prior to applying it the surface to be coated.

Thus according to another aspect of the present invention there is provided a loading tray for a coating container containing a coating composition, the loading tray being releasably attachable to the container, and having a loading section comprising a loading surface, and an aperture located in the loading surface, the aperture being arranged such that when the loading tray is attached to the container, the applicator can be at least partially passed through the aperture and into the coating composition thereby allowing the applicator to be loaded with the coating composition, the loading surface enabling the applicator to be manipulated thereon so as to remove any excess coating composition.

The provision of a loading tray with a loading surface enables any excess coating composition on the roller to be removed prior to applying it to the surface. The loading tray also reduces the amount of any excess coating dripping onto a protected area, for example, the surface the container is positioned on or above. A further advantage of attaching the loading tray is the stability it affords to the coating container. In the event that the container is accidentally knocked over, the loading tray prevents the container from falling on its side, and therefore reduces the likelihood of the coating composition escaping the container. Yet a further advantage of using the loading tray is that it negates the need to decant the coating composition from the container into a rolling tray to enable it to be rolled, and therefore the risk of spillage is reduced.

Another problem associated with applying a coating composition with a roller, particularly to railings, is that of accessibility to all surfaces of the railings, particularly the back of the railings which are often inaccessible from the front. This can prevent a complete coating being applied to these surfaces, which is particularly critical for coatings that perform a protective function since an incomplete coating will leave the surface vulnerable to attack from the environment.

According to a further aspect of the present invention there is provided a roller for applying a coating composition to a surface, the roller including a frame having first and second arms, the first and second arms including a straight portion and an angled portion, each of the first and second arms having a roller sleeve located on the angled portion, in which the angled portion is angled relative to a plane defined by the straight portions of the first and second arms.

By providing a roller having angled portions, it is possible to manipulate the arms of the roller by twisting them relative to each other such that the roller sleeves can sit flat against the back of the railing, and therefore ensure that a complete coating is applied. This is essential where a protective coating is applied. This contrasts to conventional twin rollers with straight arms.

The invention will now be described by way of example only, with reference to the accompanying drawings, in which:
Figure 1 is a perspective view of a coating system according to the present invention,
Figure 2 is a side view of the coating system of Figure 1,
Figure 3 is an enlarged side view of part of the loading tray of the coating system of Figure 1,
Figure 4 is a perspective view of the loading tray of the coating system of Figure 1,
Figure 5 is a side view of the loading tray of the coating system of Figure 1,
Figure 6 is a plan view of an alternative loading tray,
Figure 7 is a perspective view of a part of the roller of the coating system of Figure 1,
Figure 8 is a plan view of the roller of Figure 1,
Figure 9 is a side view of the roller of Figure 1,
Figure 9A is a sectional front view of the Roller of Figure 1,
Figures 10 to 12 are perspective views showing the method of using the coating system of Figure 1,
Figure 13 is a plan view of an alternative loading tray in an unlocked position,
Figure 14 is a plan view of the alternative loading tray of Figure 13 in a locked position,
Figure 15 is a side view of the alternative loading tray of Figure 13, and
Figure 16 is an enlarged side view showing part of the alternative loading tray of Figure 15.

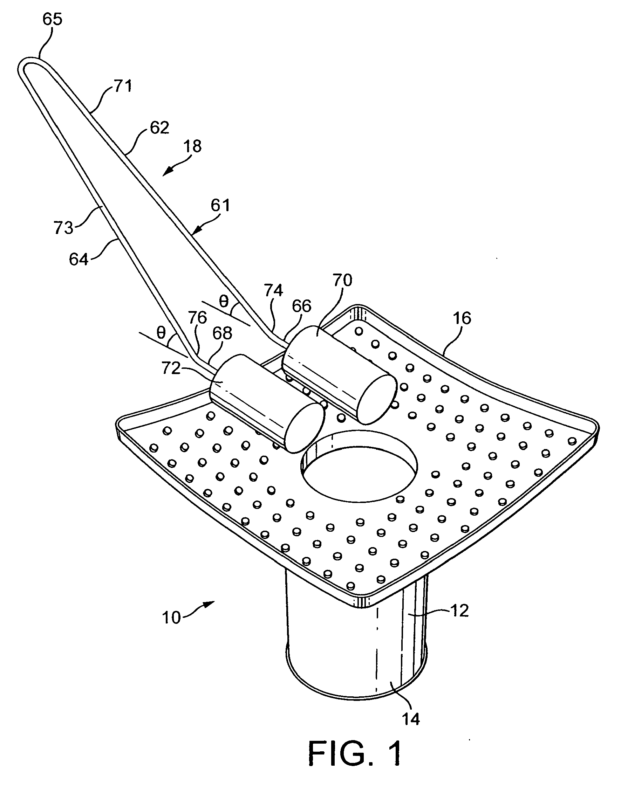

With reference to Figure 1, there is shown a coating system 10 comprising a container 12 having a coating composition 14 (hidden by the container), a loading tray 16, and a roller 18. It will be appreciated the container is a known container, and has not been modified to receive the loading tray.

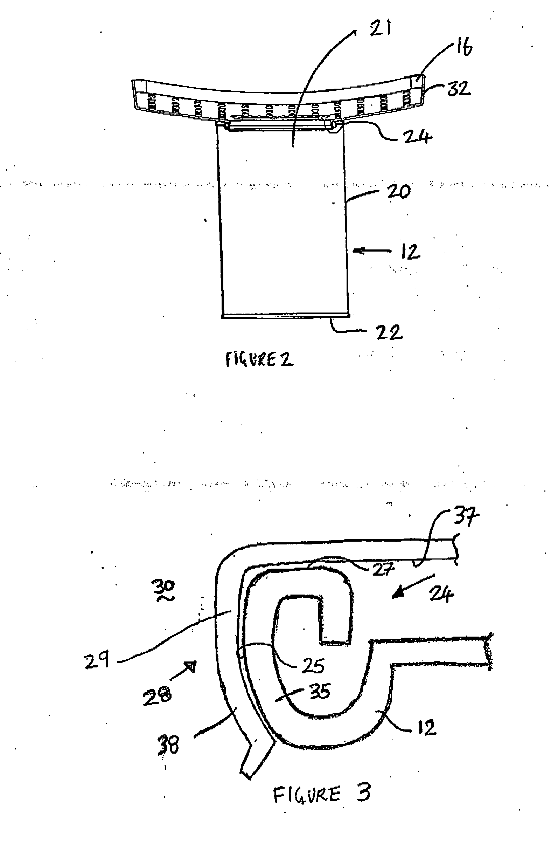

With reference to Figures 2 to 5, container 12 is cylindrical, and has a side wall 20 and a base 22. The side wall 20 includes a rim 24 which can receive a lid (not shown) to seal the container 12 so as to prevent the coating composition from drying when it is not in use. The rim 24 defines a container aperture 21. The coating container 12 is made from metal plate, with the rim 24 having a side surface 25, and a top surface 27, these surfaces being formed by folding the metal plate. It will be understood that the container 12 can also be made from other materials, for example, moulded from plastic.

The coating composition 14 comprises the components detailed in Table 1. It will be understood from Table 1 that the selection of some components, for example, the colourant, has no significant influence on the coating composition in relation to its ability to be applied using a roller.

**Table 1**

| **Functional Component** | **Description** | **%** |
|---|---|---|
| Binder | Polyurethane Alkyd | 70 - 85 |
| Corrosion Inhibitor | Zinc Phosphate | 2.4 |
| Bentonite Clay | Montomorillonite | 2.5 |
| Colourant | Colourant | 1 - 5 |
| Drier | Calcium Carboxylate | 3 |
| Drier | Cobalt Carboxylate | 0.15 |
| Slip Aid | Silicone Oil | 0.1 |
| Anti Skin | Methyl Ethyl Ketoxime | 0.3 |
| Thinner | Aliphatic Solvent | 3 - 8 |

The coating composition 14 is a single pack air drying anti-corrosion resistant and decorative coating used primarily on metal surfaces to prevent corrosion where the metal surface itself has insufficient anti-corrosion properties, for example, ferrous surfaces.

The alkyd used in the binder is a long oil Polyurethane alkyd which increases the drying time of the coating composition, as does the selection of solvent the alkyd is carried in.

The cobalt and calcium driers are also selected to increase the drying time of the coating composition.

The coating composition has a surface drying time of 90 minutes when measured at 25°C and 50% humidity with a wet film thickness of 100 microns. This compares to a surface drying time of 15 minutes for known anti-corrosion compositions for metal surfaces. By surface drying time, it is meant the time at which the coating composition is touch dry.

It is important that the coating composition has a slower drying time compared to a coating composition applied using a brush because when applying a coating using a roller the stroke is typically greater than when using a brush, due to the ability of a roller to cover larger areas, and therefore the coating composition must not dry before the roller is reapplied over a recently coated area. This also applies to coating complex surfaces, for example railings, where there the time to cover all the surfaces is increased, and therefore it is important the coating composition does not dry too quickly. For the avoidance of doubt, the term reapplied relates to the same coating layer, and does not apply to returning to apply a subsequent coat some hours later.

Furthermore, the slower drying time prevents the coating composition from drying on the roller itself.

The high shear viscosity of the coating composition is between 5.5 poise and 8.0 poise at 25°C (ICI cone & plate viscometer measuring at 10,000 reciprocal seconds). The increase in viscosity over known anti-rust metal coating compositions is also important since this allows more coating composition to be applied before sagging occurs.

Therefore, the present invention provides a coating composition which is more suitable for application with a roller.

The loading tray 16 has an upper rectangular loading section 26, and a lower cylindrical section 28 which is contiguous with the upper loading section 26. The cylindrical section 28 includes a side wall 29 which defines an aperture 30 in the upper loading section 26. In this embodiment, the cylindrical section 28 is arranged centrally within the upper loading section, however in other embodiments the cylindrical section could be offset. The advantage of the central location of the cylindrical section is the additional stability afforded to the loading tray, both when being used with a roller (see below), and in the event that the container 12 is accidentally knocked over.

The upper loading section 26 has an upstanding wall 32 located around its outer periphery. The upper loading section 26 has an upper loading surface 34, the limits of which are defined by the aperture 30 and upstanding wall 32. The upper loading section 26 has a lower surface 37.

The upper loading section 26 includes a plurality of cylindrical projections 36 equally spaced on, and extending from the upper loading surface 34.

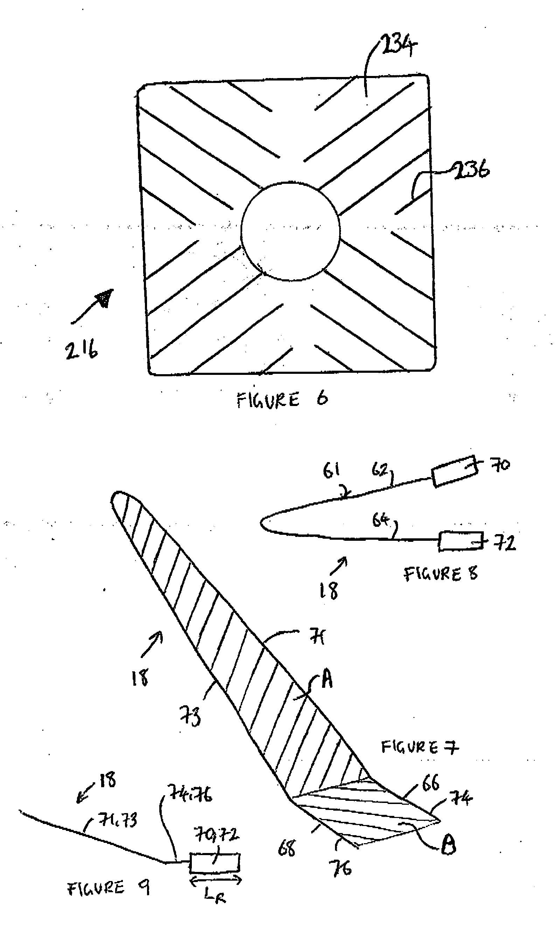

In Figure 6 there is shown an alternative loading tray 216 which is identical to that of Figure 1 except the upper loading surface 234 includes spaced longitudinal ridges 236 as opposed to cylindrical projections. The purpose of the ridges 236 is identical to the projections, with the additional benefit that the ridges assist flow of the coating composition into the coating container.

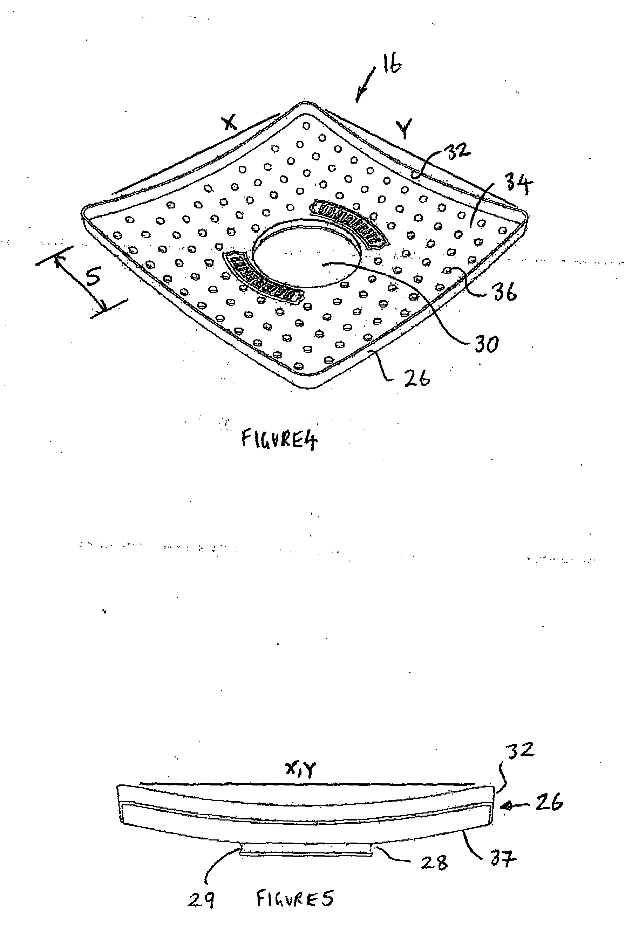

It can also be seen from Figures 4 and 5 that the upper loading section 26 is concave relative to axis X and Y such that the upper loading surface 34 is inclined in a downward direction from the upstanding side wall 32 towards the aperture 30.

The side wall 29 of the cylindrical section 28 has a lower portion 38 which is angled away from the aperture 30, and is shaped such that it has a profile which approximately corresponds to the profile of the side wall 35 of the container rim 24. It can be seen that the side wall 35 is also profiled such that it is angled away from the aperture 21 of the container.

The loading tray is made by vacuum forming, and therefore the side wall 29 of the cylindrical section 28 has a degree of flexibility. Alternative methods of manufacturing the loading tray include plastic moulding, for example, injection moulding.

Referring back to Figure 1, and Figures 7 to 9A, roller 18 comprises a frame 61 and two roller sleeves 70,72. The frame 61 has a first arm 62 and a second arm 64, the two arms 62,64 including a curved portion 65 which joins the arms at one end, and respective first and second arm ends 66,68 onto which the first and second roller sleeves 70,72 are located.

In this embodiment, the handle 61 is made from a resilient plastic, the curved portion 65 having a radius that allows the two arms 62,64 to move relative to each other under the force of a user's hand. In an alternative embodiment, the handle can be made from metal, for example, steel, or a combination of metal and plastic, for example, a plastic portion used where the roller frame is gripped by the user, and a metal portion onto which the roller sleeves are attached.

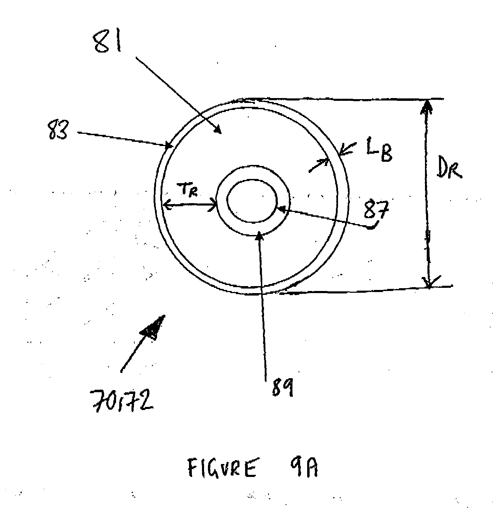

Each of the first and second arms 62,64 includes a straight portion 71,73 and an angled portion 74,76, the angled portion defining an angle θ of 22 degrees relative to a plane A defined by the first and second arms. It can be seen from Figure 7 that a plane B defined by the angled portions (shown shaded in one direction) is offset from the plane A defined by the straight portions (shown shaded in the opposite direction), as opposed being in the plane defined by the straight portions. This difference is important when considering both the loading of the roller, and when applying the coating composition using the roller, as described in relation to the operation of the roller below. Figures 8 and 9 show plan and side views of the roller 18 to further clarify the plane in which the angled portions are located relative to the straight portions of the arms.

Roller sleeves 70,72 are identical and comprise an inner compressible foam material 81, and an outer nylon flock material 83 which has a pile length L_{B} of 2mm. This maximum pile length enables application of the coating composition described above without the coating composition excessively loading the roller. This pile length also allows the roller to be loaded with a sufficient amount of coating composition and still be able to apply it to a surface and obtain a satisfactory finish.

The inner compressible material has a density of 60g/m³. It is important the foam has a high density for application of the coating composition. The roller sleeve has an outside diameter D_{R} of 35mmm and a thickness T_{R} of 15mm. The length L_{R} of each roller sleeve is 3 inches (76.2mm), this length being less than a distance S between the upstanding side wall 32 and the aperture 30 of the loading tray 16 (best seen in Figure 4).

Each roller sleeve 70,72 has a central aperture 87 which allows their insertion onto the respective ends 66,88 of the first and second arms 62,64. Each of the roller sleeves 70,72 is fixed onto their respective arms 62,64 via a bearing 89 in such a way so that the roller sleeves 70,72 can both rotate about a centre line defined by each arm, and be removed from the arms if necessary, for example for cleaning or replacement.

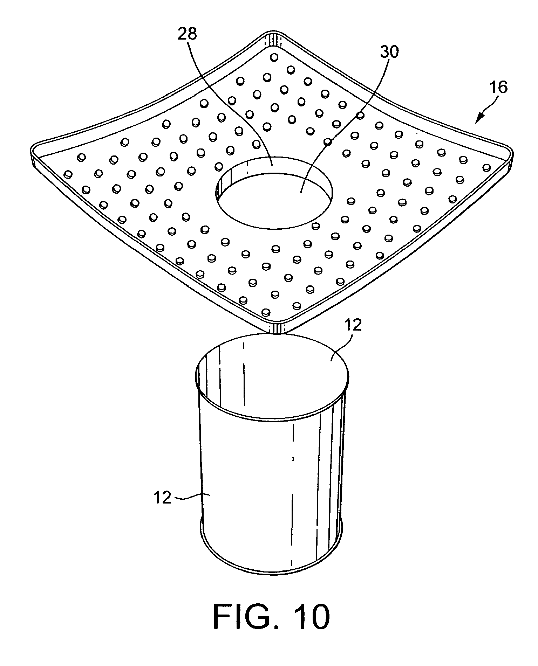

With reference to Figures 10 to 12, the coating system, and more specifically, the roller, loading tray, and container is used as follows to apply the coating composition.

The loading tray 16 is attached to the container 12 by positioning the cylindrical section 28 over the container aperture 21, and lowering it until the lower portion 38 of the loading tray snap-fits onto the side wall 35 of the container and the lower surface 37 of the tray 16 comes into contact with the top surface 27 of the container 12 (Figure 3). The angled nature of the lower portion 38, and the fact that it is made from plastic allows the loading tray to snap-fit onto the container in this way.

The resilient nature of the side wall 29 of the tray 16 is sufficient to prevent it from inadvertently being removed from the container 12 during normal operation, whilst still enabling it to be released by pulling it away from the container 12, i.e. the loading tray 16 is releasably attachable to the container 12.

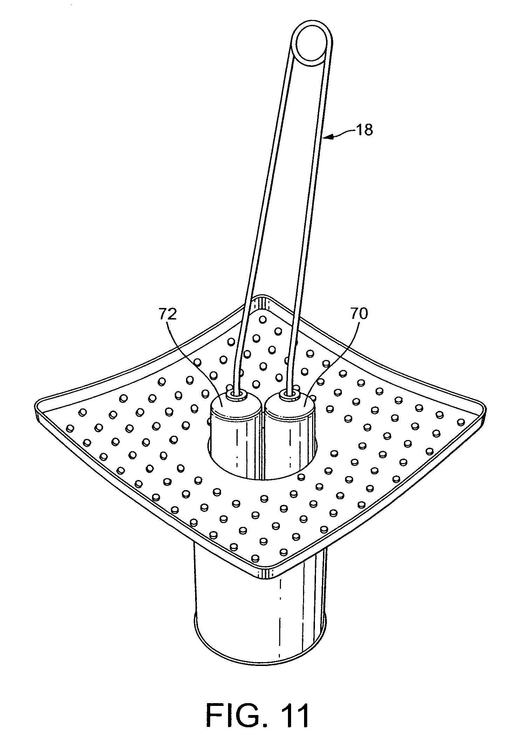

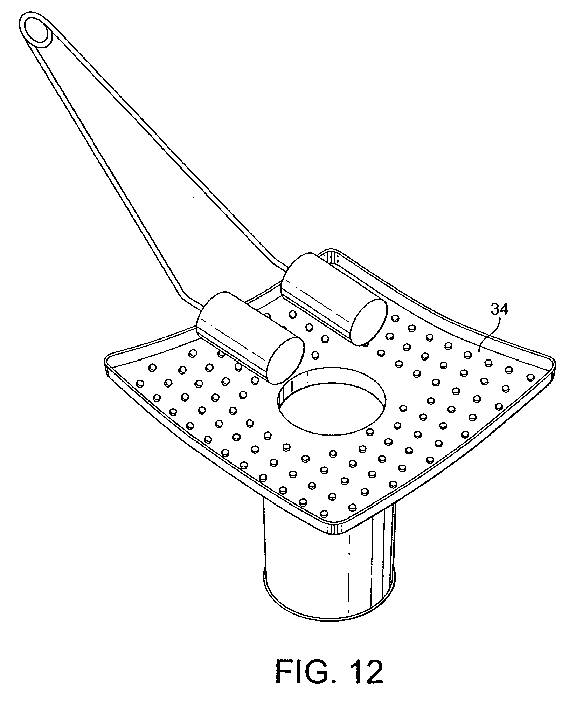

The user positions the roller sleeves 70,72 of the roller 18 through the aperture 30 of the loading tray 16 and into the coating composition 14 (Figure 11) The user then withdraws the roller sleeves 70,72 from the container 12, and rolls them over the upper loading surface 34 of the loading tray 16 so as to evenly load the rollers with the coating composition and remove any excess (Figure 12). The user is then able to apply the coating to the surface to be coated using the roller.

When loading the rollers 18 on the loading surface 34, the projections 36 engage with the roller sleeves 70,72 such that they rotate, thus removing any excess coating composition and ensuring even loading. By removing the excess coating composition, the amount of drip or splatter that would be experienced with an excessively loaded roller is reduced.

The upstanding wall 32 contains the coating composition inside the loading tray 16, and the concave nature of the loading tray 16 allows the coating composition to flow back into the container 12 via the aperture 30.

The roller 18 will find typical application in coating railings. The advantage of the first and second arms having an angled portion that is angled relative to the plane defined by the arms, rather than being either straight, or angled in a plane defined by the arms is the fact that it is possible to manipulate the arms of the roller by twisting them relative to each other such that the roller sleeves can sit flat against the back of the railing, and therefore ensure that a complete coating is applied. When the roller sleeves are twisted relative to each other, the provision of the angled portion gives a greater clearance between the roller arms and a railing adjacent that which is currently being coated. This is particularly important because the spacing between railings is subject to safety regulations, more specifically, maximum spacings are specified. Accordingly, the increased clearance afforded when using the roller of the present invention is beneficial.

It will be understood that to obtain maximum clearance between the roller arms and the railing adjacent the railing being coated, the angle θ would be 90 degrees. However, in practical terms, this angle is determined by the spacing between the railings, and the need to both load the roller, and apply the coating composition. In the case of a railing spacing of 100mm, the angle is 22 degrees. It will be appreciated that as the railing spacing is reduced, the angle required to maximise the clearance will need to increase.

Another advantage of the roller of the present invention is realised when the roller sleeves are rolled on the loading surface 34 of the loading tray 16. The fact that the roller sleeves 70,72 are angled relative to the plane defined by the arms enables the maximum surface of each sleeve to be in contact with the loading surface. This is important to obtain an even loading of the rollers and remove any excess coating composition. This contrasts to known angled twin rollers having angled portions that are in the plane defined by the first and second arms where the presence of an upstanding wall on the loading tray would prevent the maximum surface of the roller sleeves from contacting the loading surface.

Yet another advantage of the roller having an angled portion is the ability to apply a coating to the top or bottom of a surface when the top or bottom is restricted by, for example, a ceiling or a floor. The angled portion allows the user to hold the roller further away from the restriction, which is ergonomically advantageous, and still apply the coating to the surface.

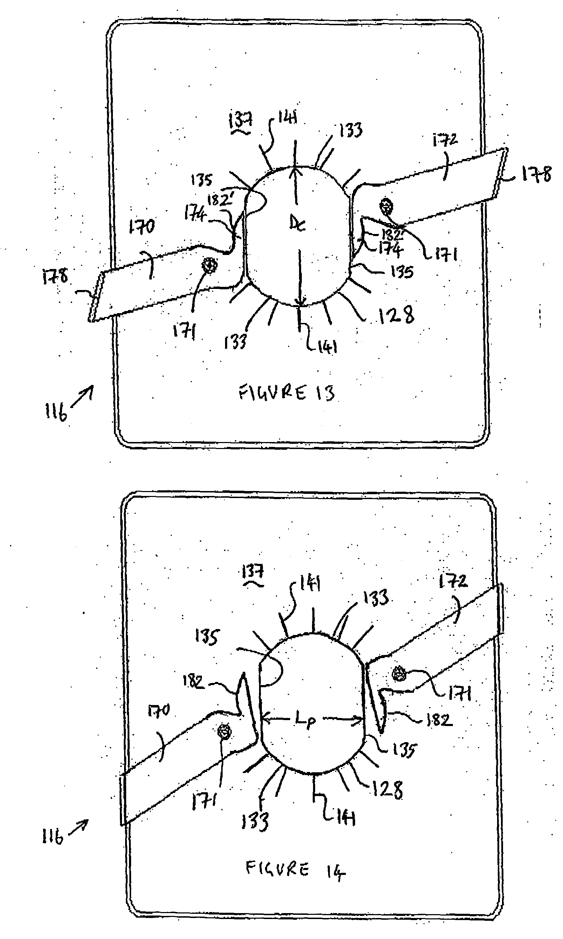

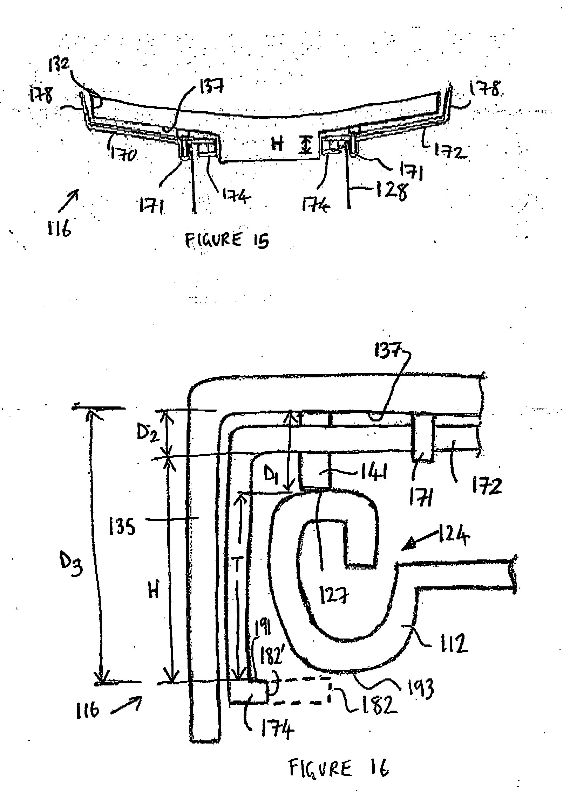

With reference to Figures 13 to 16, there is shown a loading tray 116 that is identical to that of the embodiment of Figures 1 to 5, apart from the fact that an alternative means of releasably attaching the loading tray 116 to the container is provided.

The loading tray 116 includes a cylindrical section 128 which includes a cylindrical portion 133 that is interrupted by two parallel planar portions 135. The cylindrical portion 133 has a diameter D_{C}, and the parallel planar portions 135 are separated by a distance Lp, this distance being less than the diameter D_{C}.

The loading tray 116 has a lower surface 137 which includes a plurality of spaced raised projections 141 extending radially outwards from the cylindrical section 133.

Two arms 170,172 are pivotally attached to the lower surface 137 at pivot point 171, with each arm 170,172 having a locking end 174 extending from the arm in a plane that is parallel to the plane defined by the arm at one free end, but vertically spaced apart from that plane by a distance H. An upturned end 178 extends perpendicular to the plane defined by the arm at the other free end of each arm 170,172. The upturned ends 178 extend so that they sit above the upstanding side wall 132 of the loading tray, thereby enabling them to be manipulated by the user.

The raised projections 141 extend to a depth D₁ beyond the depth D₂ of the plane defined by the locking arms at the locking ends 174, but not beyond the depth D₃ of the parallel spaced plane defined by the locking ends themselves.

Each locking arm 170,172 can pivot between a locked position (Figure 14), where the locking ends 174 extend to a position where its outer extremity 182 is beyond the diameter D_{C} of the cylindrical section, and an unlocked position (Figure 13) where the extremity 182' extends no more than diameter D_{C} of the cylindrical section. It will be appreciated that the extremity 182' is in a different position to extremity 182 on the locking end 174 due to the fact that the locking arms 170,174 have pivoted.

The loading tray 116 is attached to the container in the same way as the embodiment of Figures 1 to 5 except that instead of the snap-fit of the tray onto the side wall of the container, the loading tray 116 is lowered (with the locking arms in the unlocked position) until the top surface of the container rim comes into contact with the projections 141 of the lower surface 137 of the loading tray 116.

The locking arms 170, 172 are then rotated by the user using the upturned ends 178 until the locking ends 170,172 are in the locked position, i.e. extremity 182 extends beyond the cylindrical section diameter (shown as a dotted line in Figure 16). The pivot points 171 are positioned on the loading tray 116 such that the point at which the locking ends 174 extend beyond the cylindrical section diameter, i.e. the locked position, coincides with the point at which the upturned ends 178 engage the upstanding wall 132 of the loading tray. This is to allow for the fact that the locking ends 174 will not be visible once the loading tray is located on the container, and therefore the user needs some indication that the locking position has been achieved.

The distance T between the locking ends 174 and projections 141 is also selected such that when in the locked position, the upper surface 191 of the locking end 174 is in contact with the lower surface 193 of the container rim 124, and the projection 141 is in contact with the upper surface 127 of the container rim. This prevents excessive vertical movement between the container and the loading tray, and therefore prevents the locking arms from moving without manipulation by the user.

The diameter Dc of the cylindrical section 133 is also selected such that there is a close radial fit between the loading tray and the container, and more importantly such that when the locking arms are in the locked position, the locking ends extend underneath the rim of the container.

Thus, when in the locked position, the locking ends extend radially beyond, and vertically underneath the rim of the container, such that the loading tray cannot be removed from the container. The tray is released by rotating the arms in the opposite direction, such that the locking ends are radially inside the rim of the container, and lifting it clear of the container.

Whilst the embodiments above describe the use of a particular coating composition, loading tray, and roller, it is to be understood that the invention is not only limited to those components in combination.

It will be appreciated that it is the specific coating composition described above, and the roller sleeve properties, which enables the coating composition to be applied by a roller. However, it is also to be understood that the principle of using a roller and the loading tray of the present invention is not limited to the coating composition described above, and other compositions and rollers are envisaged with a roller and loading tray combination. The roller could be a twin roller, or a single roller with or without an angled portion. The coating composition could be any composition that is suitable for application by a roller.

Similarly, it is the combination of roller sleeve properties and coating composition properties that enables the coating composition to be rolled, and therefore, the present invention also envisages a roller and method for rolling the coating composition, the roller being characterised by the roller sleeve properties, not the angled portion, or the provision of two roller sleeves.

It will also be understood that the loading tray of the present invention is not limited to being used with the coating composition described in the embodiments above, and can be used with any coating composition. Similarly, the loading tray can be used with any container, and with any coating applicator, for example, a single roller, or a single or twin roller that either has no angled portion, or has an angled portion that is angled in a different plane, or even an alternative applicator such as a brush.

It will be further understood that the roller described in Figure 1 is not limited to being used with either the coating composition or the loading tray described, and that the advantages of the angled portion of the roller applies to all coating compositions,

## Claims

1. A coating system comprising a container having a coating composition, and a roller for applying the coating composition to a surface, the coating composition having a high shear viscosity of between 5.5 to 8.0 poise at 25°C (ICI cone and plate viscometer) and a surface drying time greater than 60 minutes at a temperature of 25°C and a humidity of 50%.

2. A coating system according to claim 1 in which the roller has a roller sleeve comprising an inner compressible material, and an outer flock located thereon with a maximum pile length of 2mm such that it can apply the coating composition to the surface.

3. A coating system according to claim 1 or 2 in which the coating composition has a drying time between 60 and 120 minutes at a temperature of 25°C and a humidity of 50%.

4. A coating system according to any preceding claim in which the coating composition has a viscosity between of 6.0 to 8.0 poise at 25°C (ICI cone and plate viscometer).

5. A coating system according to any preceding claim in which the roller has a frame having first and second arms, the first and second arms including a straight portion and an angled portion, each of the first and second arms having a roller sleeve located on the angled portion, in which the angled portion is angled relative to a plane defined by the straight portions of the first and second arms

6. A coating system according to claim 5 in which the angled portion is angled at a maximum of 90 degrees, preferably between 20 and 60 degrees, more preferably between 20 and 40 degrees, most preferably between 20 and 30 degrees.

7. A coating system according to any preceding claim further comprising a loading tray, the loading tray being releasably attachable to the container, and having a loading section comprising a loading surface, and an aperture located in the loading surface, the aperture being arranged such that when the loading tray is attached to the container, the roller can be at least partially passed through the aperture and into the coating composition thereby allowing the roller to be loaded with the coating composition, the loading surface enabling the roller to be manipulated thereon so as to remove any excess coating composition.

8. A loading tray for a coating container containing a coating composition, the loading tray being releasably attachable to the container, and having a loading section comprising a loading surface, and an aperture located in the loading surface, the aperture being arranged such that when the loading tray is attached to the container, the applicator can be at least partially passed through the aperture and into the coating composition thereby allowing the applicator to be loaded with the coating composition, the loading surface enabling the applicator to be manipulated thereon so as to remove any excess coating composition.

9. A coating system including a loading tray according to claim 8 in which the coating applicator is a roller.

10. A coating system according to claim 9 in which the roller is a twin roller.

11. A coating system according to claim 7 or 9 or 10, or a loading tray according to claim 8 in which the aperture is centrally located in the loading surface.

12. A coating system according to claim 7 or 9 or 10 or 11, or a loading tray according to claim 8 or 11 in which the loading surface is concave such that the coating composition can drain back into the container.

13. A coating composition having a high shear viscosity of between 5.5 to 8.0 poise at 25°C (ICI cone and plate viscometer) and a surface drying time greater than 60 minutes at a temperature of 25°C and a humidity of 50%.

14. A roller for applying a coating composition to a surface, the roller including a frame having first and second arms, the first and second arms including a straight portion and an angled portion, each of the first and second arms having a roller sleeve located on the angled portion, in which the angled portion is angled relative to a plane defined by the straight portions of the first and second arms

15. A roller according to claim 14 in which the angled at a maximum of 90 degrees, preferably between 20 and 60 degrees, more preferably between 20 and 40 degrees, most preferably between 20 and 30 degrees.

16. A roller for applying the coating composition of claim 13 to a surface, the roller sleeve comprising an inner compressible material, and an outer flock located thereon with a maximum pile length of 2mm such that it can apply the coating composition to the surface.

17. A method for applying a coating composition to a surface using a roller, the coating composition having a high shear viscosity of between 5.5 to 8.0 poise at 25°C (ICI cone and plate viscometer) and a surface drying time greater than 60 minutes at a temperature of 25°C and a humidity of 50%.

18. A method according to claim 17 in which the roller has a roller sleeve comprising an inner compressible material, and an outer flock located thereon with a maximum pile length of 2mm such that it can apply the coating composition to the surface.

19. A method according to claim 17 or 18 further including the steps of providing a loading tray as defined in claims 8, 11, or 12, inserting the roller through the aperture of the loading tray and into the coating composition, withdrawing the roller, rolling the roller across the loading surface of the loading tray so as to remove any excess coating composition, and rolling the roller across the surface so as to transfer the coating composition from the roller to the surface.

20. A coating system according to any one of claims 1 to 7 or 9 to 12, or a loading tray according to claim 8 or 11 or 12, or a roller according to any one of claims 14 to 16, or a method according to any one of claims 17 to 19 in which the surface is part of a railing.

21. A coating system according to any one of claims 1 to 7 or 9 to 12 or 20, or a loading tray according to claim 8 or 11 or 12 or 20, or a roller according to any one of claims 14 to 16 or claim 20, or a method according to any one of claims 17 to 19 or claim 20 in which the coating composition is an anti-rust coating composition for a metal surface.
